# EUROPEAN PATENT SPECIFICATION

(11) **EP 3 491 423 B1**
(45) Date of publication and mention of the grant of the patent: **16.02.2022**
(21) Application number: 17835393.4
(22) Date of filing: 28.07.2017
(51) Int. Cl.: G01T 1/02, G01T 1/16

(54) **RADIATION DETECTION APPARATUS COMPRISING A SEAL FOR ELECTRICAL PASSTHROUGH**
STRAHLUNGSDETEKTIONSGERÄT MIT EINER DICHTUNG FÜR ELEKTRISCHE DURCHFÜHRUNG
APPAREIL DE DETECTION DE RADIATION COMPRENANT UN JOINT D'ÉTANCHÉITÉ POUR TRAVERSÉE ÉLECTRIQUE

(30) Priority: 29.07.2016 US 201662368906 P
(43) Date of publication of application: 05.06.2019
(73) Proprietor: Saint-Gobain Ceramics&Plastics, Inc., Worcester, MA 01615 (US)
(72) Inventor: BUSH, Michael Lea, Ravenna, Ohio 44266 (US); MCLAUGHLIN, Michael Terrance II., Lyndhurst, Ohio 44124 (US)
(74) Representative: Zimmermann & Partner Patentanwälte mbB
(86) International application number: PCT/US2017/044538
(87) International publication number: WO 2018/023084

(56) References cited:
- EP-A1- 0 971 243
- WO-A1-97/42523
- US-A- 3 859 523
- US-A- 3 950 646
- US-A- 4 047 464
- US-A- 6 100 530
- US-A1- 2013 026 376
- US-A1- 2013 032 392
- US-A1- 2014 084 162

## Description

### TECHNICAL FIELD

The present disclosure is directed to radiation detection apparatus comprising an electrical passthrough.

### BACKGROUND ART

Scintillator-based detectors are used in a variety of applications, including research in nuclear physics, oil exploration, field spectroscopy, container and baggage scanning, and medical diagnostics. When a scintillator material of the scintillator-based detector is exposed to ionizing radiation, the scintillator material absorbs energy of incoming radiation and scintillates, remitting the absorbed energy in the form of photons. A photosensor of the scintillator-based detector detects the emitted photons. Radiation detection apparatuses can analyze pulses for many different reasons. Continued improvements are desired.

EP0971243 discloses a radiation detection apparatus comprising: a scintillator, a photosensor, a seal overlying the scintillator and the photosensor and having a thickness, and an electrical conductor extending through the seal. And US2013032392 discloses an electrical pass-through comprising a seal having an entry surface and an exit surface separated a distance in a first direction and opposing side walls separated a distance in a second direction, an electrical conductor extending through the seal, wherein the electrical conductor enters the polymer seal at an entry point along the entry surface and exits the polymer seal at an exit point along the exit surface.

### BRIEF DESCRIPTION OF THE DRAWINGS

Embodiments are illustrated by way of example and are not limited in the accompanying figures.
FIG. 1 includes an illustration of a radiation detection assembly according to an embodiment described herein.
FIGs. 2 and 3 include illustrations of seals according to embodiments described herein.
FIG. 4 includes an illustration of an analyzer device according to an embodiment described herein.

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE PREFERRED EMBODIMENTS(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes," "including," "has," "having," or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the scintillation and radiation detection arts.

A seal described herein can provide a contaminant resistant seal while allowing a body to pass through it. Typically, a body is passed directly through a seal, for example, to displace as little of the seal material as possible. However, the Inventors have discovered that an indirect pathway through the seal can provide increased contaminant resistance. Details of the improved seal that can be an electrical passthrough are provided below.

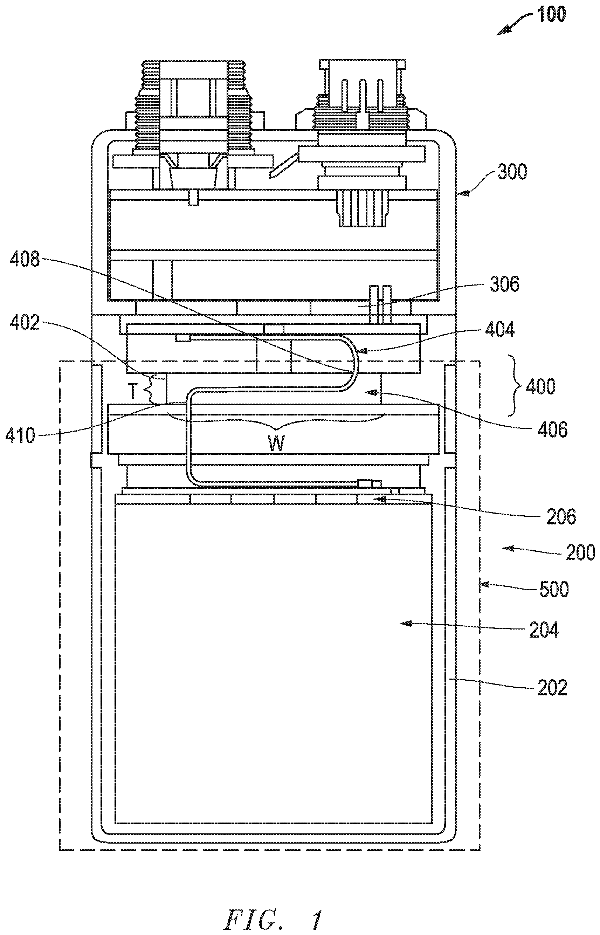

FIG. 1 illustrates an exemplary radiation detection assembly 100 including a scintillator module 200 and an electronics module 300. The scintillator module 200 can include a scintillator casing 202 which encloses a scintillator 204 and a photosensor 206 optically coupled to the scintillator. The electronics module 300 can include an electronics package electrically coupled to the photosensor 206. The scintillator module 200 and the electronics module can be separated by an interface region 400.

As illustrated in FIG. 1, the interface region 400 can be coupled to the scintillator module 200, such as, for example, as a partition within the scintillator casing 202 or a cap disposed at an end of the scintillator casing 202. In an embodiment, the scintillator casing 202 together with the interface region 400 can enclose, even completely enclose, at least the scintillator 204 and possibly the photosensor 206. Further, the scintillator casing 202 together with the interface region 400 can provide a hermetically sealed enclosure 500 for the scintillator 204. In an embodiment, the casing 202 can include a metal casing, such as an aluminum casing. For example, the radiation detection assembly 100 can include a sealed portion and an unsealed portion separated by the seal 402, where the body 404 extends through the seal 402 from the sealed portion to the unsealed portion.

The interface region 400 can include a seal 402 and a body 404 extending through the seal 402. The seal 402 can be an electrical passthrough, and the body 404 can be a conductor, such as an electrical conductor. In a particular embodiment, the electrical conductor can include a flat cable. In a more particular embodiment, the conductor does not include a cable having a circular profile, such as a coaxial cable. In a further particular embodiment, the electrical conductor can include a multi-wire cable, such as a cable having at least two wires, or at least three wires, or at least four wires. For example, the electrical conductor can include a flat, multi-wire cable. In a particular embodiment, the electrical conductor can include a ribbon cable. In an embodiment, the body can couple the photosensor 206, within the scintillator module 200, to the electronics module 300.

As illustrated in FIG. 1, the body 404 can extend through the seal 402 along an indirect pathway 406. As used herein, the term "direct pathway" with respect to a seal refers to a pathway that has a length through a seal that is the same as the thickness of the seal, whereas the term "indirect pathway" refers to a pathway that is longer than the direct pathway.

The indirect pathway 406 can include a linear pathway or a non-linear pathway. As used herein, the term "linear pathway" refers to a pathway that extends in one direction along the entire pathway, whereas the term "non-linear pathway" refers to a pathway that extends in a direction at a point along the pathway and at least one other non-parallel direction at another point along the pathway.

The seal 402 can have opposing surfaces separated a distance in a surface direction and opposing sidewalls separated a distance in a sidewall direction, and the surface and sidewall directions can be orthogonal to each other. The opposing surfaces can include an entry surface and an exit surface, as discussed below. The pathway 406 can have an entry point 408 along the entry surface, and an exit point 410 along the opposing exit surface. The entry point 408 refers to a point along an entry surface of the seal 402 where the body 404 extends into the seal 402, and the exit point 410 refers to another point along an exit surface of the seal 402 where the body 404 extends from the seal 402. In an embodiment, the entry surface of the seal 402 faces an interior volume of the scintillator casing 202. In a further embodiment, the exit surface of the seal 402 faces the electronics module 300, is opposite the entry surface, or both.

In an embodiment, the indirect pathway 406 can include a displacement in the sidewall direction. The displacement in the sidewall direction can be defined as the distance separating the entry point and the exit point in the sidewall direction. In a particular embodiment, the displacement can include a distance of at least 10 mm, or at least 50 mm, or at least 100 mm along the exit surface. In a further embodiment, the displacement can include a distance of no greater than 1000 mm, or no greater than 900 mm, or no greater than 800 mm.

Further, the displacement in the sidewall direction can be defined as a percentage of the distance separating the sidewalls, such as at least 5%, or at least 15%, or at least 25%, or at least 50% of the distance separating the sidewalls. In an embodiment, the displacement can be at most 99%, or at most 95%, or at most 90% of the distance separating the opposing sidewalls.

In an embodiment, the non-linear pathway can include at least one bend or at least two bends such that the electrical conductor bends in at least one or at least two directions within the seal. In an embodiment, the non-linear pathway can include a portion extending in the surface direction from the entry point, a bend followed by a portion extending in the sidewall direction, and another bend followed by a portion extending to the exit point in the surface direction.

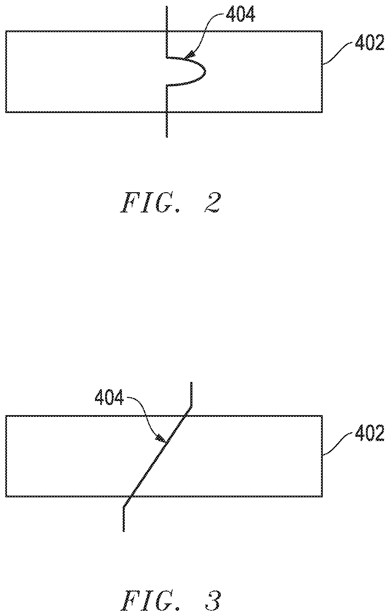

In certain embodiments, the pathway can be an indirect pathway that does not include a displacement in the sidewall direction, or has a minimal displacement in the sidewall direction. For example, as illustrated in FIG. 2, the non-linear pathway can include at least one portion that extends away from the entry point axis and returns to the entry point axis so that the exit point lies along or near the entry point axis. In an embodiment, the indirect pathway does not include a displacement in the sidewall direction or the radial offset is at most 5 % of the distance separating the sidewalls, or at most 3% of the distance separating the sidewalls, or at most 1% of the distance separating the sidewalls.

In certain embodiments, the pathway can be a linear pathway with a displacement in the sidewall direction. For example, as illustrated in FIG. 3, the linear pathway can extend in a direction oblique to the entry point axis. In an embodiment, the linear pathway can have a displacement in the sidewall direction of at least 1%, or at least 3%, or at least 5%.

In an embodiment, the seal can provide a light-tight seal. Light leaking through the scintillator can cause signal noise that makes the signal more difficult to read. In particular, the seal can reduce the transmission of visible light, ultraviolet light, or both.

In an embodiment, the seal 402 can include a polymer seal. The polymer seal can include a polymeric material. The polymeric material can include at least one of a thermoplastic polymer and a thermoset polymer. Examples of the polymeric material can include a polyamide, a polyaramide, a polyimide, a polyolefin, a polyvinylchloride, an acrylic polymer, a diene monomer polymer, a polycarbonate (PC), a polyetheretherketone (PEEK), a fluoropolymer, a polyester, a polypropylene, a polystyrene, a polyurethane, a silicone polymer, a phenolic polymer, a nylon polymer, an epoxy polymer, or any combination thereof. In a particular embodiment, the polymeric layer includes an epoxy. In an embodiment, the polymeric material can include a cationic curing polymer.

Further, the polymeric material can possess properties specific to the intended use. For example, the polymeric material can contain polymeric fillers, mineral fillers, metallic fillers, or any combination thereof to change the appearance, light transmission, abrasion resistance or other physical properties of the seal 402. For example, the polymeric material can be colored in any desired color, such as a color that is resistant to light transmission. Further, the polymeric material can be textured for appearance or for low surface friction. In an embodiment, the polymeric material may have increased strength or abrasion resistance to maintain barrier integrity in the face of physical stresses.

The seal 402 can have a thickness T from the entry surface to the exit surface. In an embodiment, the thickness T can be at most 1.5 cm, or at most 1.3 cm, or at most 1.1 cm, or at most 0.9 cm. Further, the entry surface and the exit surface can be connected by sidewalls on either side of the seal 402, and the seal 402 can have a width W extending from one sidewall to the other sidewall. In an embodiment, the width W can be at least 0.5 cm, or at least 1 cm, or at least 1.5 cm, or at least 2 cm, or at least 2.5 cm. In an embodiment, the seal 402 can have a width W that is greater than the thickness T. In an embodiment, the ratio of width W to thickness T is greater than 1, or at least 1.4, or at least 1.8, or at least 2.2, or at least 2.6.

The photosensor 206 can include a photomultiplier chip or a photomultiplier tube. In an embodiment, the photomultiplier chip can include a solid-state photomultiplier, such as a semiconductor-based photomultiplier chip. In an embodiment, the photomultiplier chip includes at least one of Si, SiC, GaN, InP, CdTe, or any combination thereof. In a more particular embodiment, the photomultiplier chip can include a silicon-based photomultiplier. In an embodiment, the photomultiplier can include a photomultiplier chip disposed on a surface of the scintillator.

The scintillator can include at least one of an inorganic scintillator material and an organic scintillator material. In an embodiment, the scintillator material is an inorganic scintillator material. In an embodiment, the inorganic scintillator material can include a rare earth halide. For example, the inorganic scintillator material includes at least one of a sodium iodide, a cesium iodide, a bismuth germinate, a lanthanum bromide, a cerium bromide, a lanthanum chloride, a lutetium oxyorthosilicate, a lutetium yttrium oxyorthosilicate, a cesium lithium lanthanum bromide, a cesium lithium lanthanum bromo-chloride, a cesium lithium yttrium chloride. In another embodiment, the scintillator is an organic scintillator material. For example, the organic scintillator material can include an anthracene, a stilbene, or a plastic. In an embodiment, the scintillator includes a hygroscopic scintillator material.

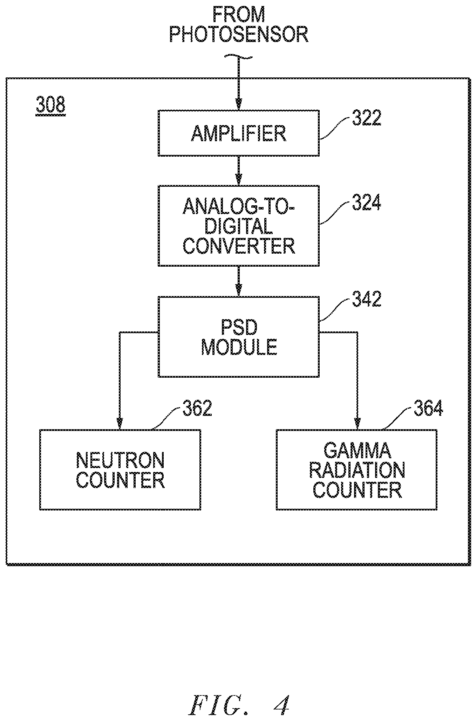

The electronics package 306 can further include an analyzer device 308 electrically coupled to the photosensor 206, as illustrated in FIG. 4. The analyzer device 308 can include hardware and can be at least partly implemented in software, firmware, or a combination thereof. In an embodiment, the hardware can include a plurality of circuits within an FPGA, an ASIC, another integrated circuit or on a printed circuit board, or another suitable device, or any combination thereof. The analyzer device 308 can also include a buffer to temporarily store data before the data are analyzed, written to storage, read, transmitted to another component or device, another suitable action is performed on the data, or any combination thereof.

In the embodiment illustrated in FIG. 4, the analyzer device 308 can include an amplifier 322 coupled to the photosensor 206, such that an electronic pulse from the photosensor 206 can be amplified before analysis. The amplifier 322 can be coupled to an analog-to-digital converter (ADC) 324 that can digitize the electronic pulse. The ADC 324 can be coupled to a pulse shape discrimination (PSD) module 342. In a particular embodiment, the PSD module 342 can include a FPGA or an ASIC. In a particular embodiment, the PSD module 342 can include circuits to analyze the shape of the electronic pulse and determine whether the electronic pulse corresponds to a neutron or gamma radiation. In a more particular embodiment, the PSD module 342 can use the electronic pulse and temperature from a temperature sensor with a look-up table to determine whether the electronic pulse corresponds to a neutron or gamma radiation. The look-up table can be part of the FPGA or ASIC or may be in another device, such as an integrated circuit, a disk drive, or a suitable persistent memory device.

The analyzer device 308 can include a neutron counter 362 and a gamma radiation counter 364. If the PSD module 342 determines that an electronic pulse corresponds to a neutron, the PSD module 342 increments the neutron counter 362. If the PSD module 342 determines that an electronic pulse corresponds to gamma radiation, the PSD module 342 increments the gamma radiation counter 364. While FIG. 3 illustrates a dual mode radiation detector, in other embodiments the radiation detector could be single mode radiation detector, and the analyzer could include only one of the neutron counter 362 or the gamma radiation counter 364.

Any of the scintillators as previously described can be used in a variety of applications. Exemplary applications include radiation detectors for a security detection apparatus, a well-logging detection apparatus, a gamma ray spectroscopy apparatus, an isotope identification apparatus, Single Positron Emission Computer Tomography (SPECT) analysis apparatus, a Positron Emission Tomography (PET) analysis apparatus, and an x-ray imaging apparatus.

Embodiments as described herein can help to improve seal integrity for an electrical passthrough. The Inventors have discovered that contaminants, such as water, may migrate along an interface between an electrical conductor and a surrounding polymer seal. Migration along the interface can be significantly greater than migration through the material of the polymer seal itself. Thus, by using a more indirect path for the electrical conductor through the polymer seal, contaminants that migrate along the interface have a longer path than if the electrical conductor lies along a shortest path through the polymer seal. For example, in FIGs. 1 to 3, the length of the electrical conductor as it passes through the seal 402 is longer than the thickness of the seal 402. A more tortuous path of the electrical conductor through the polymer seal can further increase the seal integrity. In a particular embodiment, most of the length of the electrical conductor passing through the polymer seal can extend in one direction and then in an opposite direction, such as illustrated in FIG. 1. As the length gets longer, other considerations may affect selection of the length. For example, if contaminant migration through the material of the polymer seal itself, separate from the interface, is greater than contaminant migration along an interface, lengthening the path of the electrical conductor through the polymer seal may not further improve the seal integrity.

Further, parasitic electrical effects, such as resistance through the conductor may cause signal amplitude loss or signal delay for signals passing through the electrical conductor. After reading this specification, skilled artisans will be able to determine the length and path of the electrical conductor through the polymer seal to achieve the needs or desires for a particular application.

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A radiation detection apparatus (100) comprising:
a scintillator (204);
a photosensor (206);
a seal (402) overlying the scintillator (204) and the photosensor (206) and having a thickness; and
an electrical conductor (404) extending through the seal (402), **characterized in that** the length of the electrical conductor (404) as it passes through the seal (402) is greater than the thickness of the seal (402).

2. The apparatus (100) of claim 1, wherein the seal (402) comprises a polymer seal (402).

3. The apparatus (100) of claim 2, wherein the polymer seal (402) comprises an epoxy.

4. The apparatus (100) of claim 2, wherein the photosensor (206) is optically coupled to the scintillator (204).

5. The apparatus (100) of claim 2, wherein the photosensor (206) includes a solid-state photomultiplier.

6. The apparatus (100) of claim 5, wherein the solid-state photomultiplier includes at least one of Si, SiC, GaN, InP, CdTe, or any combination thereof.

7. The apparatus (100) of claim 2, wherein the photosensor (206) is disposed on a surface of the scintillator (204).

8. The apparatus (100) of claim 2, wherein the scintillator material includes a hygroscopic material.

9. The apparatus (100) of claim 2, further comprising a casing (202) including a sealed portion and an unsealed portion separated by the seal (402), the sealed portion comprising the scintillator (204) and the photosensor (206), and the electrical conductor (404) extending through the seal (402) from the sealed portion to the unsealed portion.

10. The apparatus (100) of claim 2, wherein the apparatus (100) includes one of a security detection apparatus, an well-logging detection apparatus, a gamma ray spectroscopy apparatus, an isotope identification apparatus, Single Positron Emission Computer Tomography (SPECT) analysis apparatus, a Positron Emission Tomography (PET) analysis apparatus, and an x-ray imaging apparatus.

11. The apparatus (100) of any one of claims 1 to 10, wherein the electrical conductor (404) includes a flat cable.

12. The apparatus (100) of any one of claims 1 to 10, wherein the electrical conductor (404) includes a multi-wire cable.

13. The apparatus (100) of claims 1 to 10, wherein the seal (402) has an entry surface and an exit surface separated by a distance in a first direction and opposing side walls separated by a distance in a second direction; wherein the electrical conductor enters the polymer seal at an entry point on the entry surface and exits the polymer seal at an exit point on the exit surface; and wherein the entry point and the exit point have a displacement in the second direction that is at least 5%, or at least 15%, or at least 25%, or at least 50% of the distance separating the opposing sidewalls.

14. The apparatus (100) of claim 2, wherein the polymer seal (402) has an entry surface and an exit surface separated by a distance in a first direction and opposing side walls separated by a distance in a second direction; and
wherein the electrical conductor (404) enters the polymer seal (402) at an entry point (408) along the entry surface and exits the polymer seal (402) at an exit point (410) along the exit surface,
wherein the entry point (408) and the exit point (410) have a displacement in the second direction that is at least 50% of the distance separating the opposing sidewalls.

15. The apparatus (100) of claim 14, wherein the electrical conductor extends through the polymer seal along a non-linear pathway.

## Patentansprüche

1. Strahlungsdetektionsgerät (100), umfassend:
einen Szintillator (204);
einen Fotosensor (206);
eine Dichtung (402), die über dem Szintillator (204) und dem Fotosensor (206) liegt und eine Dicke aufweist; und
einen sich durch die Dichtung (402) erstreckenden elektrischen Leiter (404), **dadurch gekennzeichnet, dass** die Länge des elektrischen Leiters (404) beim Durchlaufen der Dichtung (402) größer als die Dicke der Dichtung (402) ist.

2. Gerät (100) nach Anspruch 1, wobei die Dichtung (402) eine Polymerdichtung (402) umfasst.

3. Gerät (100) nach Anspruch 2, wobei die Polymerdichtung (402) ein Epoxid umfasst.

4. Gerät (100) nach Anspruch 2, wobei der Fotosensor (206) optisch mit dem Szintillator (204) gekoppelt ist.

5. Gerät (100) nach Anspruch 2, wobei der Fotosensor (206) einen Festkörper-Fotovervielfacher einschließt.

6. Gerät (100) nach Anspruch 5, wobei der Festkörper-Fotovervielfacher mindestens eines aus Si, SiC, GaN, InP, CdTe oder einer beliebigen Kombination davon einschließt.

7. Gerät (100) nach Anspruch 2, wobei der Fotosensor (206) auf einer Oberfläche des Szintillators (204) angeordnet ist.

8. Gerät (100) nach Anspruch 2, wobei das Szintillatormaterial ein hygroskopisches Material einschließt.

9. Gerät (100) nach Anspruch 2, ferner umfassend ein Gehäuse (202), das einen abgedichteten Abschnitt und einem nicht abgedichteten Abschnitt einschließt, die durch die Dichtung (402) getrennt sind, wobei der abgedichtete Abschnitt den Szintillator (204) und den Fotosensor (206) umfasst und der elektrische Leiter (404) sich durch die Dichtung (402) von dem abgedichteten Abschnitt zu dem nicht abgedichteten Abschnitt erstreckt.

10. Gerät (100) nach Anspruch 2, wobei das Gerät (100) ein Sicherheitsdetektionsgerät, ein Bohrlochprotokollierungsgerät, ein Gammastrahlen-Spektroskopiegerät, ein Isotopenerkennungsgerät, ein SPECT-Analysegerät (SPECT = Single Positron Emission Computer Tomography), ein PET-Analysegerät (PET = Positron Emission Tomography) und ein Röntgen-Bildgebungsgerät einschließt.

11. Gerät (100) nach einem der Ansprüche 1 bis 10, wobei der elektrische Leiter (404) ein Flachkabel einschließt.

12. Gerät (100) nach einem der Ansprüche 1 bis 10, wobei der elektrische Leiter (404) ein mehradriges Kabel einschließt.

13. Gerät (100) nach den Ansprüchen 1 bis 10, wobei die Dichtung (402) eine Eintrittsoberfläche und eine Austrittsoberfläche, die durch einen Abstand in einer ersten Richtung getrennt sind, und gegenüberliegende Seitenwände aufweist, die durch einen Abstand in einer zweiten Richtung getrennt sind; wobei der elektrische Leiter an einem Eintrittspunkt an der Eintrittsoberfläche in die Polymerdichtung eintritt und die Polymerdichtung an einem Austrittspunkt an der Austrittsoberfläche verlässt; und wobei der Eintrittspunkt und der Austrittspunkt eine Verschiebung in der zweiten Richtung aufweisen, die mindestens 5 % oder mindestens 15 % oder mindestens 25 % oder mindestens 50 % des Abstands beträgt, der die gegenüberliegenden Seitenwände trennt.

14. Gerät (100) nach Anspruch 2, wobei die Polymerdichtung (402) eine Eintrittsoberfläche und eine Austrittsoberfläche, die durch einen Abstand in einer ersten Richtung getrennt sind, und gegenüberliegende Seitenwände aufweist, die durch einen Abstand in einer zweiten Richtung getrennt sind; und
wobei der elektrische Leiter (404) an einem Eintrittspunkt (408) entlang der Eintrittsoberfläche in die Polymerdichtung (402) eintritt und die Polymerdichtung (402) an einem Austrittspunkt (410) entlang der Austrittsoberfläche verlässt,
wobei der Eintrittspunkt (408) und der Austrittspunkt (410) eine Verschiebung in der zweiten Richtung aufweisen, die mindestens 50 % des Abstands beträgt, der die gegenüberliegenden Seitenwände trennt.

15. Gerät (100) nach Anspruch 14, wobei sich der elektrische Leiter entlang eines nichtlinearen Weges durch die Polymerdichtung erstreckt.

## Revendications

1. Appareil de détection de radiation (100) comprenant :
un scintillateur (204) ;
un photocapteur (206) ;
un joint d'étanchéité (402) recouvrant le scintillateur (204) et le photocapteur (206) et ayant une épaisseur ; et
un conducteur électrique (404) s'étendant à travers le joint d'étanchéité (402), **caractérisé en ce que** la longueur du conducteur électrique (404) lorsqu'il traverse le joint d'étanchéité (402) est supérieure à l'épaisseur du joint d'étanchéité (402).

2. Appareil (100) selon la revendication 1, dans lequel le joint d'étanchéité (402) comprend un joint d'étanchéité polymère (402).

3. Appareil (100) selon la revendication 2, dans lequel le joint d'étanchéité polymère (402) comprend un époxy.

4. Appareil (100) selon la revendication 2, dans lequel le photocapteur (206) est optiquement couplé au scintillateur (204).

5. Appareil (100) selon la revendication 2, dans lequel le photocapteur (206) inclut un photomultiplicateur à semi-conducteur.

6. Appareil (100) selon la revendication 5, dans lequel le photomultiplicateur à semi-conducteur inclut au moins l'un de Si, SiC, GaN, InP, CdTe ou toute combinaison de ceux-ci.

7. Appareil (100) selon la revendication 2, dans lequel le photocapteur (206) est disposé sur une surface du scintillateur (204).

8. Appareil (100) selon la revendication 2, dans lequel le matériau scintillateur inclut un matériau hygroscopique.

9. Appareil (100) selon la revendication 2, comprenant en outre un boîtier (202) incluant une partie scellée et une partie non scellée séparées par le joint d'étanchéité (402), la partie scellée comprenant le scintillateur (204) et le photocapteur (206) et le conducteur électrique (404) s'étendant à travers le joint d'étanchéité (402) de la partie scellée à la partie non scellée.

10. Appareil (100) selon la revendication 2, dans lequel l'appareil (100) inclut l'un d'un appareil de détection de sécurité, d'un appareil de détection de diagraphie de puits, d'un appareil de spectroscopie à rayons gamma, d'un appareil d'identification d'isotopes, d'un appareil d'analyse par tomographie par ordinateur à émission unique de positrons (SPECT). d'un appareil d'analyse par tomographie à émission de positrons (TEP) et d'un appareil d'imagerie par rayons X.

11. Appareil (100) selon l'une quelconque des revendications 1 à 10, dans lequel le conducteur électrique (404) inclut un câble plat.

12. Appareil (100) selon l'une quelconque des revendications 1 à 10, dans lequel le conducteur électrique (404) inclut un câble multifilaire.

13. Appareil (100) selon les revendications 1 à 10, dans lequel le joint d'étanchéité (402) a une surface d'entrée et une surface de sortie séparées par une distance dans une première direction et des parois latérales opposées séparées par une distance dans une seconde direction ; dans lequel le conducteur électrique pénètre dans le joint d'étanchéité polymère à un point d'entrée sur la surface d'entrée et sort du joint d'étanchéité polymère à un point de sortie sur la surface de sortie ; et dans lequel le point d'entrée et le point de sortie ont un déplacement dans la seconde direction qui est d'au moins 5 % ou d'au moins 15 % ou d'au moins 25 % ou d'au moins 50 % de la distance séparant les parois latérales opposées.

14. Appareil (100) selon la revendication 2, dans lequel le joint d'étanchéité polymère (402) a une surface d'entrée et une surface de sortie séparées par une distance dans une première direction et des parois latérales opposées séparées par une distance dans une seconde direction ; et
dans lequel le conducteur électrique (404) pénètre dans le joint d'étanchéité polymère (402) à un point d'entrée (408) le long de la surface d'entrée et sort du joint d'étanchéité polymère (402) à un point de sortie (410) le long de la surface de sortie,
dans lequel le point d'entrée (408) et le point de sortie (410) ont un déplacement dans la seconde direction qui est d'au moins 50 % de la distance séparant les parois latérales opposées.

15. Appareil (100) selon la revendication 14, dans lequel le conducteur électrique s'étend à travers le joint d'étanchéité polymère le long d'un trajet non linéaire.
